# EUROPEAN PATENT SPECIFICATION

(11) **EP 4 155 149 B1**
(45) Date of publication and mention of the grant of the patent: **25.06.2025**
(21) Application number: 22188868.8
(22) Date of filing: 04.08.2022
(51) Int. Cl.: B60W 30/09, B60W 30/095, B60W 30/12, B60W 30/14, B60W 30/16

(54) **DRIVING CONTROL APPARATUS FOR VEHICLE**
STEUERUNGSVORRICHTUNG FÜR FAHRZEUG
APPAREIL DE COMMANDE D'ENTRAÎNEMENT POUR VÉHICULE

(30) Priority: 24.09.2021 JP 2021155891
(43) Date of publication of application: 29.03.2023
(73) Proprietor: Suzuki Motor Corporation, Hamamatsu-shi, Shizuoka 432-8611 (JP)
(72) Inventor: SATO, Katsuhiko, HAMAMATSU-SHI, 432-8611 (JP)
(74) Representative: Plasseraud IP

(56) References cited:
- EP-B1- 3 044 061
- WO-A1-2019/197864
- US-A1- 2019 308 617
- US-A1- 2020 070 818
- US-A1- 2020 391 731
- US-A1- 2020 406 970

## Description

### [Technical Field]

The present invention relates to driving control apparatuses for vehicles, and more particularly, relates to an emergency avoidance function during operation of an automatic lane keeping system.

### [Background Art]

Various driving control systems are being put into practical use and are being internationally standardized for purposes of reducing burdens on drivers and for supporting safe driving. For example, driving control systems, such as an inter-vehicle distance control system (ACCS) and a lane keeping assistance system (LKAS) that have already been put into practical use, and a "partially automated in-lane driving system (PADS)" that is a combination of these, are in the process of being put into practical use. Among these, regulations of an "automatic lane keeping system (ALKS)" related to automated driving in a single lane under specific conditions, such as a motor highway with a speed limit of 60 km/h or less and a physical separation zone (median strip) separating from an oncoming lane, are being developed.

In such an automatic lane keeping system, when a serious failure occurs in the system or when a driver cannot respond to an operation takeover request, operation shifts to risk minimization control (MRM: Minimal Risk Maneuver). On the other hand, when a collision with another vehicle is anticipated, emergency avoidance control (EM: Emergency Maneuver) is activated, and the operation shifts to collision avoidance or in-lane stop by deceleration at maximum deceleration.

For example, Patent Document 1 discloses increasing a lateral distance from another vehicle traveling in parallel when an automatic stop mode that stops a vehicle in a predetermined stop area is performed in a case in which a predetermined condition that makes it difficult for a vehicle control system or driver to continue driving is satisfied while the vehicle is traveling.

Other examples of background art can be found in Patent Documents 2-5.

### [Citation List]

### [Patent Document]

[Patent Document 1] JP 2020-158090 A
[Patent Document 2] US2020/391731 A1
[Patent Document 3] US2020/406970 A1
[Patent Document 4] US2020/070818 A1
[Patent Document 5] US2019/308617 A1

### [Summary of Invention]

### [Problem to be Solved by the Invention]

However, when the vehicle is stopped, movements of vehicles ahead and in the rear are not taken into consideration, so there is a risk of contact and collision when a vehicle in the rear cannot avoid the decelerated and stopped vehicle.

The present invention has been made in view of the above-described actual situation, and an object is to improve an avoidance effect by taking the positions of vehicles ahead and vehicles in the rear into consideration when emergency avoidance control is activated.

### [Means for Solving the Problems]

In order to solve the above-described problems, the present invention is
a driving control apparatus for a vehicle, including:
an environmental condition estimating part including a surrounding recognition function for recognizing a vehicle's driving lane, neighboring lanes, other vehicles driving in the driving lanes, and surrounding environments and a function for obtaining the vehicle's moving state;
a path generating part for generating a target path on the basis of information obtained by the environmental condition estimating part; and
a vehicle control part configured to perform speed control and steering control for making the vehicle follow the target path, and having:
   a function for performing automated in-lane driving by maintaining a set vehicle speed when there is no vehicle ahead in the vehicle's driving lane, and maintaining a set inter-vehicle distance when there is a vehicle ahead; and
   an EM function for performing emergency avoidance control including operation of an emergency brake when a collision with a vehicle ahead or an obstacle in front in the vehicle's driving lane is predicted,
   when the EM function is activated, when a lateral position of the vehicle ahead or obstacle in the vehicle's driving lane is deviating to either left or right with respect to the vehicle's driving position, a direction of avoidance steering is set to a direction opposite to the deviation and the avoidance steering is performed together with the emergency braking..

### [Advantageous Effects of Invention]

In the driving control apparatus for a vehicle according to the present invention, as described above, when the EM function is activated, the direction of avoidance steering is determined on the basis of the lateral position of a vehicle ahead or an obstacle that has caused the activation and the avoidance steering is performed together with the emergency braking, so there is an advantage that probability of avoiding a collision with the vehicle ahead can be improved by avoidance steering even when a braking distance for emergency stop is insufficient.

### [Brief Description of Drawings]

[Figure 1] Figure 1 is a schematic view showing a driving control system of a vehicle.
[Figure 2] Figure 2 is a schematic plan view showing an external sensor group of the vehicle.
[Figure 3] Figure 3 is a block diagram showing the driving control system of the vehicle.
[Figure 4] Figure 4 is a state transition diagram of control in the driving control system.
[Figure 5] Figure 5 is a flowchart showing control of an embodiment of the preset invention.
[Figure 6] Figure 6 is a schematic plan view showing an example of relative positional relationship between a vehicle and a vehicle ahead when EM is activated.
[Figure 7] Figure 7 is a schematic plan view showing an example of relative positional relationship between the vehicle and a vehicle in the rear when the EM is activated.
[Figure 8] Figure 8 is a flowchart showing an avoidance steering direction determination when the EM is activated.

### [Mode for Carrying Out the Invention]

Hereinafter, an embodiment of the present invention will be described in detail with reference to the drawings.

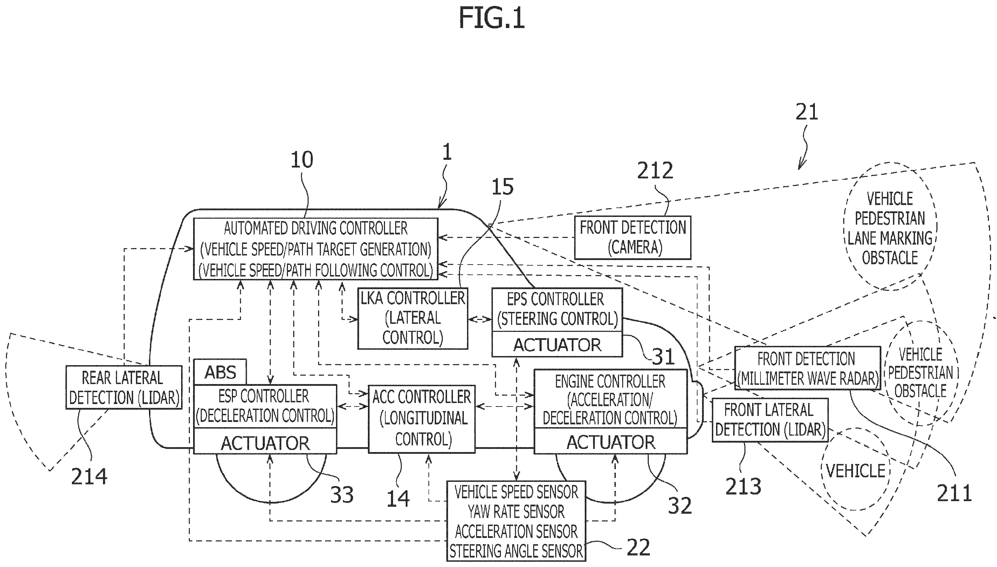

In Figure 1, a vehicle 1 equipped with a driving control system according to the present invention includes, in addition to common components, such as an engine and a vehicle body, of an automobile, an external sensor 21 for detecting a vehicle surrounding environment, an internal sensor 22 for detecting vehicle information, a controller/actuator group for speed control and steering control, an ACC controller 14 for inter-vehicle distance control, an LKA controller 15 for lane keeping control, and an automated driving controller 10 for controlling them to execute partially automated in-lane driving (PADS: Partially Automated in-lane Driving System), automated in-single lane driving (ALKS: Automatic Lane Keeping System), and automated lane change (PALS: Partially Automated Lane change System) in order to perform, at the vehicle side, recognition, determination, and operation conventionally performed by a driver.

The controller/actuator group for speed control and steering control includes an EPS (Electric Power Steering) controller 31 for steering control, an engine controller 32 for acceleration/deceleration control, and an ESP/ABS controller 33. An ESP (Electronic Stability Program, registered trademark) includes an ABS (Antilock Brake System) to form a stability control system (vehicle behavior stabilization control system).

The external sensor 21 is composed of a plurality of detection means for inputting lane markings on a road defining the vehicle's own driving lane and neighboring lanes, and presence of, and relative distance from, other vehicles, obstacles, people, and the like around the vehicle into the automated driving controller 10 as external data such as image data or point cloud data.

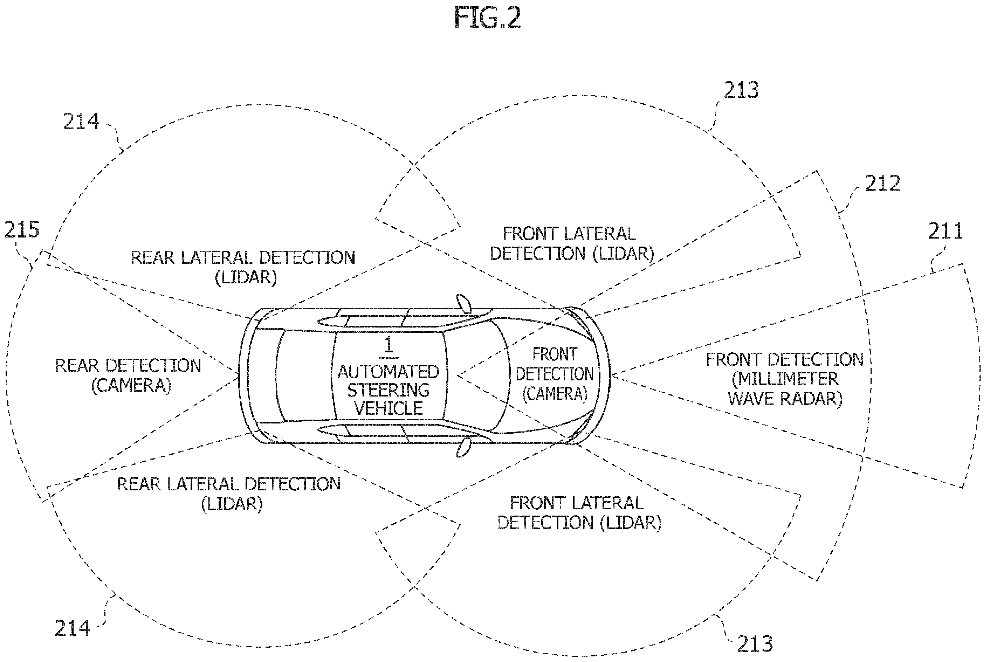

For example, as shown in Figure 2, the vehicle 1 includes a millimeter wave radar (211) and a camera (212) as front detection means 211 and 212, LIDARs (Laser Imaging Detection And Ranging) as front lateral detection means 213 and rear lateral detection means 214, and a camera (back camera) as rear detection means 215, covers 360 degrees around the vehicle, and can detect positions of and distance from vehicles, obstacles and the like, and lane marking positions of the vehicle's own driving lane and the neighboring lanes within a predetermined range in the front, rear, left, and right directions of the vehicle. Note that a millimeter wave radar (or LIDAR) can be also added as the rear detection means.

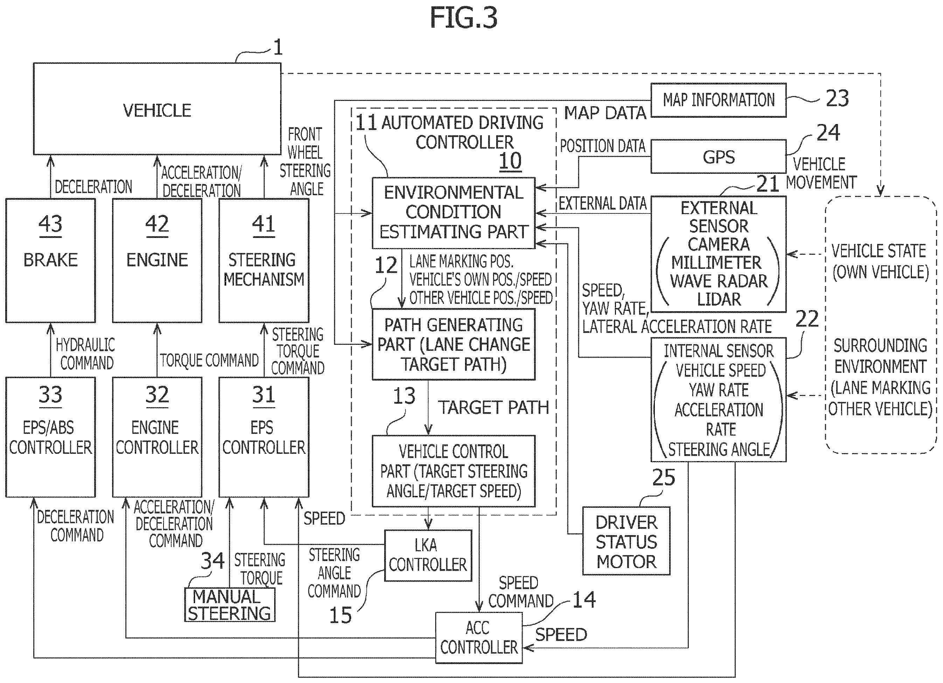

The internal sensor 22 is composed of a plurality of detection means, such as a vehicle speed sensor, a yaw rate sensor and an acceleration sensor, for measuring physical quantities representing the vehicle's moving state, and their measurement values are input into the automated driving controller 10, ACC controller 14, LKA controller 15, and EPS controller 31 as shown in Figure 3, and arithmetically processed together with the input from the external sensor 21.

The automated driving controller 10 includes an environmental condition estimating part 11, a path generating part 12 and a vehicle control part 13, and includes a computer for performing functions as described below, that is, a ROM storing programs and data, a CPU for performing arithmetic processing, a RAM for reading out the programs and data, and storing dynamic data and arithmetic processing results, an input/output interface, and the like.

The environmental condition estimating part 11 acquires the absolute position of the vehicle itself by matching the vehicle's own position information by positioning means 24 such as a GPS and map information 23, and on the basis of the external data such as the image data and point cloud data obtained by the external sensor 21, estimates positions of lane markings of the vehicle's own driving lane and the neighboring lanes, and positions and speeds of other vehicles. In addition, it acquires the vehicle's moving state itself from internal data measured by the internal sensor 22. Furthermore, it acquires the driver's state by a driver status monitor 25.

The path generating part 12 generates a target path from the vehicle's own position estimated by the environmental condition estimating part 11 to an arrival target. In addition, the path generating part 12 generates a target path from the vehicle's own position to an arrival target point in automated driving, such as lane keeping driving, lane change, and course change, on the basis of the positions of the lane markings of the neighboring lane, the positions and speeds of the other vehicles, and the vehicle's moving state estimated by the environmental condition estimating part 11.

The vehicle control part 13 calculates a target vehicle speed and a target steering angle on the basis of the target path generated by the path generating part 12, transmits a speed command for constant speed cruise or inter-vehicle distance keeping and following cruise to the ACC controller 14, and transmits a steering angle command for path following to the EPS controller 31 via the LKA controller 15.

The vehicle speed is also input into the EPS controller 31 and ACC controller 14. Because a steering reaction force changes according to the vehicle speed, the EPS controller 31 refers to a steering angle-steering torque map for each vehicle speed and transmits a torque command to a steering mechanism 41. The engine controller 32, ESP/ABS controller 33, and EPS controller 31 control an engine 42, a brake 43, and the steering mechanism 41, and thereby the movement of the vehicle 1 in a longitudinal direction and a lateral direction is controlled.

### Outline of Partially Automated In-Lane Driving System

Next, an outline of the partially automated in-lane driving system (PADS) will be described.

The partially automated in-lane driving system (PADS) is a system that combines the inter-vehicle distance control system (ACCS: Adaptive Cruise Control System) and the lane keeping assistance system (LKAS), and is enabled in a state in which both ACC controller 14 included in the inter-vehicle distance control system (ACCS) and LKA controller 15 included in the lane keeping assistance system (LKAS) are operating together with the automated driving controller 10.

At the same time as operation of the partially automated in-lane driving system, the automated driving controller 10 (path generating part 12) generates a target path in a single lane and a target vehicle speed on the basis of the external information (lanes, vehicle's own position, and positions and speeds of other vehicles driving in the own driving lane and the neighboring lane) obtained by the environmental condition estimating part 11 through the external sensor 21, and the internal information (vehicle speed, yaw rate, and acceleration) obtained by the internal sensor 22.

The automated driving controller 10 (vehicle control part 13) estimates the speed, attitude, and lateral displacement of the vehicle after Δt seconds from a relationship between a yaw rate γ and lateral acceleration rate (d²y/dt²) occurring due to vehicle movement, by the vehicle's own position and motion characteristics of the vehicle itself, that is, by a front wheel steering angle δ occurring when a steering torque T is applied to the steering mechanism 41 during traveling at a vehicle speed V, gives a steering angle command that makes the lateral displacement to yt after Δt seconds to the EPS controller 31 via the LKA controller 15, and gives a speed command that makes the speed to Vt after Δt seconds to the ACC controller 14.

Although the ACC controller 14, LKA controller 15, EPS controller 31, engine controller 32, and ESP/ABS controller 33 operate independently of automatic steering, they are also operable according to command input from the automated driving controller 10 while a partially automated in-lane driving function (PADS), automatic lane keeping system (ALKS) and a partially automated lane change system (PALS) are operating.

The ESP/ABS controller 33 that has received a deceleration command from the ACC controller 14 issues a hydraulic command to an actuator and controls braking force of the brake 43 to control the vehicle speed. In addition, the engine controller 32 that has received an acceleration/deceleration command from the ACC controller 14 controls an actuator output (degree of throttle opening) to give the engine 42 a torque command and controls driving force to control the vehicle speed.

The ACC function (ACCS) functions with combination of hardware and software, such as the millimeter wave radar as the front detection means 211 included in the external sensor 21, ACC controller 14, engine controller 32, and ESP/ABS controller 33.

That is, in a case in which there is no vehicle ahead, the ACC function performs constant speed cruise by setting an ACC set speed (set speed) as the target vehicle speed; and in a case of having caught up with the vehicle ahead (in a case in which a speed of the vehicle ahead is equal to or slower than the ACC set speed), the ACC function performs following cruise to the vehicle ahead while maintaining an inter-vehicle distance (set inter-vehicle distance) corresponding to a time gap (inter-vehicle time = inter-vehicle distance/speed of vehicle) set in accordance with the speed of the vehicle ahead.

The LKA function (LKAS) detects the lane markings and the vehicle's own position by the environmental condition estimating part 11 of the automated driving controller 10 on the basis of image data obtained by the external sensor 21 (cameras 212 and 215), and performs steering control by the EPS controller 31 via the LKA controller 15 so as to be able to drive at the center of a lane.

That is, the EPS controller 31 that has received the steering angle command from the LKA controller 15 refers to a vehicle speed-steering angle-steering torque map, issues a torque command to an actuator (EPS motor), and gives a front wheel steering angle targeted by the steering mechanism 41.

The partially automated in-lane driving system (PADS) is implemented by combining longitudinal control (speed control and inter-vehicle distance control) by the ACC controller 14 and lateral control (steering control and lane keeping driving control) by the LKA controller 15 as described above.

### System State Monitoring

During operation of the partially automated in-lane driving system (PADS), the environmental condition estimating part 11 constantly monitors whether the driving state and surrounding environmental condition of the vehicle and the driver's state are maintained within an operational design domain (ODD) on the basis of the external information obtained through the external sensor 21, the vehicle information obtained by the internal sensor 22, the driver's state obtained by the driver status monitor 25, and the like.

When the environmental condition estimating part 11 determines that automated driving cannot be continued stably, such as when a system operating condition is determined to be deviated, or when a system abnormality or failure is detected, the driver is notified of an operation takeover request (TD: transition demand).

When the driver takes over driving operation within a predetermined time (for example, 10 seconds) from the operation takeover request (TD), the operation shifts from the partially automated in-lane driving to manual driving. The driver's operation takeover is detected by a steering torque sensor or a steering wheel grip sensor. On the other hand, when the driving operation is not taken over within the predetermined time, minimal risk maneuver (MRM) is activated and risk minimization control is performed.

### Risk Minimization Control When Operation Takeover is Not Performed

The minimal risk maneuver (MRM) refers to a function for automatic shifting to a minimal risk condition when the driver cannot take over the operation, although a change in the external driving environment or a failure or the like in the system has occurred and the driver is notified of the operation takeover request (TD), and specifically, includes control (safe stop) of decelerating and stopping in the lane by the automated driving controller 10.

As described above, the external sensor 21 is composed of the plurality of sensors, and the automated driving controller 10 is redundantly designed so that the minimal risk maneuver (MRM) can be executed by other sensors or detection means when an abnormality occurs in any sensor or detection means.

### Emergency Avoidance Control When Collision is Predicted

When a collision with another vehicle is anticipated for some reason while the partially automated in-lane driving system (PADS) is operating, emergency maneuver (EM) is activated and emergency avoidance control is performed. The emergency avoidance control (EM) includes activation of the automatic emergency braking (AEB) for collision damage mitigation.

That is, the environmental condition estimating part 11 constantly calculates a predicted collision time (TTC) on the basis of information (inter-vehicle distance and relative speed) of a vehicle ahead (or obstacle) detected by the external sensor 21 and the vehicle speed of the vehicle acquired by the internal sensor 22, and when it is determined that there is a high probability of collision, such as when the predicted collision time is equal to or less than a predetermined value, issues a brake request (hydraulic command) to an actuator of the brake 43 and executes automatic braking (automatic emergency braking).

### Outline of Partially Automated In-Lane Driving System

Next, an outline of the automatic lane keeping system (ALKS) will be described assuming a state of partially automated in-lane driving (PADS driving) on a highway with a median strip.

The automatic lane keeping system (ALKS) is a system combining the inter-vehicle distance control system (ACCS) and the lane keeping assistance system (LKAS) in the same way as the partially automated in-lane driving system (PADS), and is executed in a state in which both ACC controller 14 included in the inter-vehicle distance control system (ACCS) and the LKA controller 15 included in the lane keeping assistance system (LKAS) are operating together with the automated driving controller 10, but can only be executed in a speed range of 60 km/h or less.

During operation of the automatic lane keeping system (ALKS), automated driving is executed while maintaining a single lane. In addition to the above, the automatic lane keeping system (ALKS) can be executed when the driver status monitor 25 confirms that the driver has responded to the takeover request and can take over driving; as long as the driver is seated in the driver's seat and the seatbelt is fastened, the driver is not required to monitor the driving situation.

Since the minimum speed is set at 50 km/h on a highway, shift from the partially automated in-lane driving (PADS driving) to the automatic lane keeping system (ALKS) is performed when the vehicle speed falls to 50 km/h or less due to congestion on the highway substantially in a state of following cruise to the vehicle ahead by partially automated in-lane driving (PADS driving) or when, e.g., the vehicle catches up to the vehicle ahead that is driving at 50 km/h or less due to congestion.

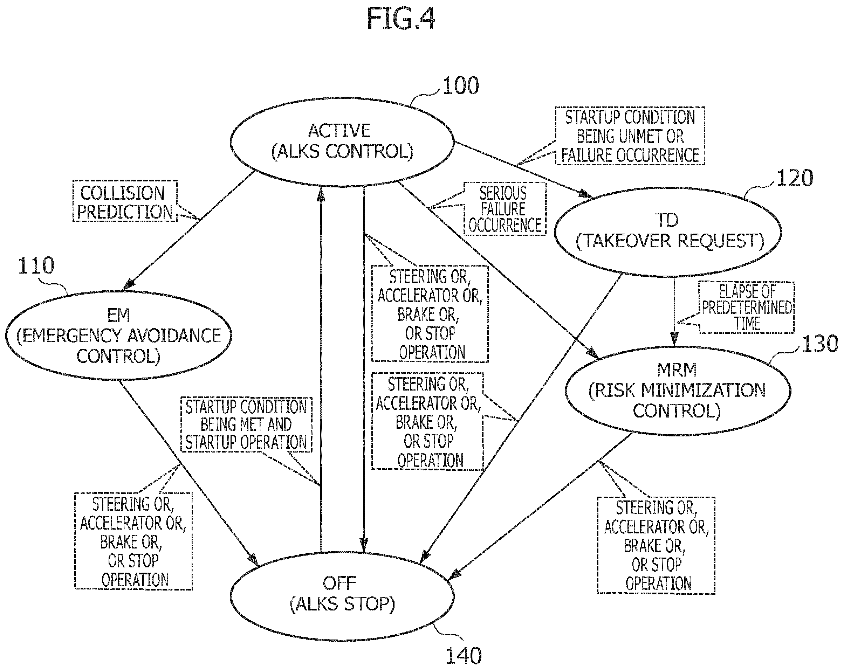

Figure 4 shows state transition of control in the automatic lane keeping system (ALKS). Even during the operation of the automatic lane keeping system (ALKS) (100), the environmental condition estimating part 11 constantly monitors the driving state and surrounding environmental condition of the vehicle, and the driver's state; when the environmental condition estimating part 11 determines that a system activation condition is not met, or detects a system failure (excluding serious failures described later), the system notifies the driver of the operation takeover request (TD) (120), and shifts from the automated lane keeping driving to the manual driving (140) when the driver takes over the driving operation within the predetermined time (for example, ten seconds).

When the driving operation takeover is not performed within the predetermined time, the minimal risk maneuver (MRM) is activated, and the risk minimization control (130) is performed. Note that when the environmental condition estimating part 11 determines that a serious failure has occurred in the system (such as engine hydraulic pressure reduction, engine water temperature increase, or brake system abnormality that may cause an accident, fire, or the like) during the operation of the automatic lane keeping system (ALKS), the operation takeover request (TD) is not made, the minimal risk maneuver (MRM) is immediately activated, and the risk minimization control (130) is performed.

During the operation of the automatic lane keeping system (ALKS) (100), when a collision is anticipated for some reason, such as interruption of another vehicle, sudden deceleration or collision of a vehicle ahead, or an obstacle (falling object), and an activation condition of emergency avoidance control is met, the emergency maneuver (EM) is activated, and automatic emergency braking (AEB) is performed as the emergency avoidance control (110).

The automated driving system as described above enables override by the driver's operation intervention not only during the operation of the automatic lane keeping system (ALKS), but also during the operation of the risk minimization control (MRM) or emergency avoidance control (EM). That is, when the override (accelerator OR or brake OR) by the driver's acceleration/deceleration operation intervention or the override (steering OR) by the driver's steering intervention is performed, each automated driving function described above is stopped and the operation shifts to the driver's manual driving.

As described above, the automatic emergency braking (AEB) is performed when the emergency avoidance control (EM) is activated, but a braking distance may be insufficient depending on an activation situation, a road surface condition, or the like. Even in such a case, collision damage is expected to be reduced, but a collision avoidance probability can be increased by performing the avoidance steering in consideration of driving positions (lateral positions) of a vehicle ahead (cause vehicle) and a vehicle in the rear in the lane.

### Improved Emergency Avoidance Control

The automated driving controller 10 according to the present invention constantly monitors the driving positions of the vehicle ahead (cause vehicle) and the vehicle in the rear as follows, in order to perform the avoidance steering at the same time as the automatic emergency braking (AEB) when the emergency avoidance control (EM) is activated.

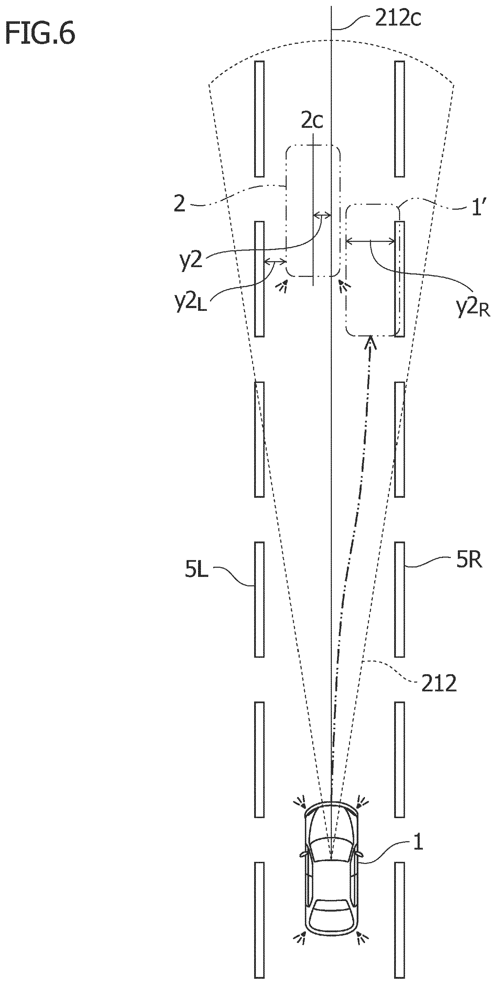

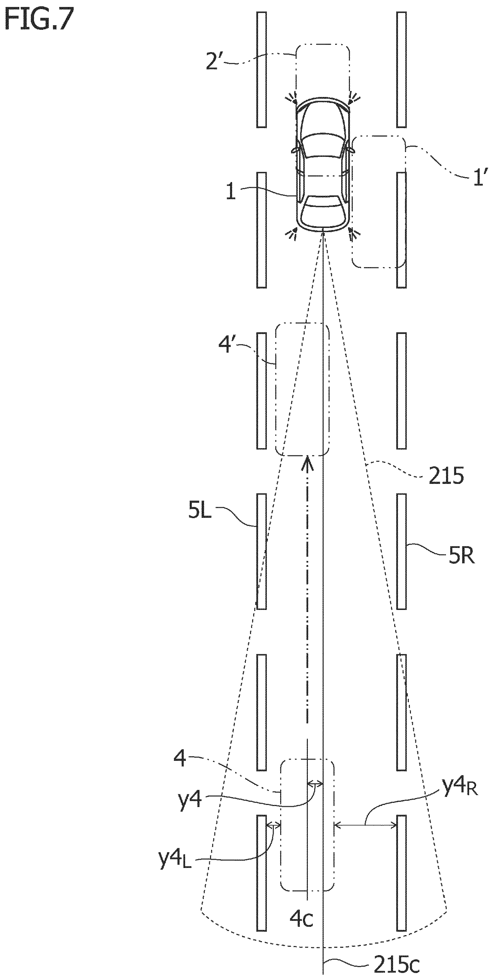

That is, the environmental condition estimating part 11 constantly detects a lateral position y2 (Figure 6) within the lane of a vehicle ahead 2, together with the lane markings and the vehicle's own position, on the basis of the image data obtained by the external sensor 21 (cameras 212 and 215), and when there is a vehicle 4 in the rear within a rear predetermined distance in the vehicle's driving lane, further constantly detects its lateral position y4 (Figure 7).

For example, as shown in Figure 6, the lateral position y2 of the vehicle ahead 2 is detected as a lateral deviation amount (relative deviation amount) and a deviation direction of either left or right of a center 2c of the vehicle ahead 2 with respect to a center line 212c of a front detection area corresponding to a traveling direction of the vehicle 1. The lateral position of the vehicle ahead 2 can be also detected on the basis of lateral distances y2R and y2L from lane markings 5R and 5L to the vehicle ahead 2.

On the other hand, as shown in Figure 7, when the vehicle 4 in the rear is present within the rear predetermined distance in the vehicle's driving lane, the lateral position y4 of the vehicle in the rear vehicle 4 in the rear is detected as a lateral deviation amount (relative deviation amount) and a deviation direction of either left or right of a center 4c of the vehicle in the rear vehicle 4 in the rear with respect to a center line 215c of a rear detection area of the vehicle 1. The lateral position y4 of the vehicle in the rear vehicle 4 in the rear can be also detected on the basis of lateral distances y4R and y4L from the lane markings 5R and 5L to the vehicle in the rear vehicle 4 in the rear. Note that, at night, the center 4c can be detected from left and right head lamps of the vehicle in the rear vehicle 4 in the rear.

The rear predetermined distance in the vehicle's driving lane is set, assuming that the vehicle in the rear vehicle 4 in the rear follows and travels at the same speed as the vehicle 1, on the basis of a braking distance and a free running distance (vehicle in the rear reaction distance + braking rise distance) at maximum deceleration at the speed; however, when ranging means (such as a millimeter wave radar) is added as the rear detection means, the rear predetermined distance may be set on the basis of an estimated vehicle speed of the vehicle 4 in the rear.

The environmental condition estimating part 11 constantly detects obstacles such as falling objects and stopped vehicles in front in the vehicle's driving lane on the basis of the image data obtained by the external sensor 21 (camera 212); when an obstacle in front is detected and the emergency avoidance control (EM) is activated, as an avoidance target as with the vehicle ahead described above, its lateral position and lateral width are obtained.

The environmental condition estimating part 11 further constantly monitors presence of a neighboring lane and an effective road shoulder that can serve as evacuation spaces on the basis of detection information of the external sensor 21. The effective road shoulder is, for example, a road shoulder generally provided on a highway and having a pavement structure with a width of 1.75 m or more, and does not include a protective road shoulder without the pavement structure.

When the emergency avoidance control (EM) is activated, at the same time as activation of the automatic emergency braking (AEB), the avoidance steering is performed as follows.

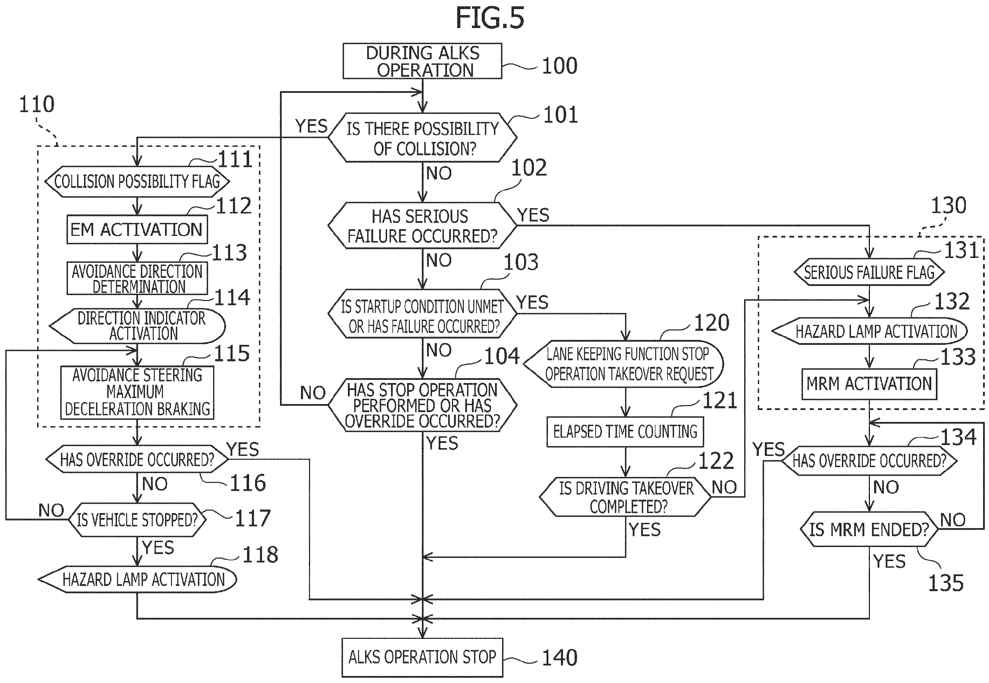

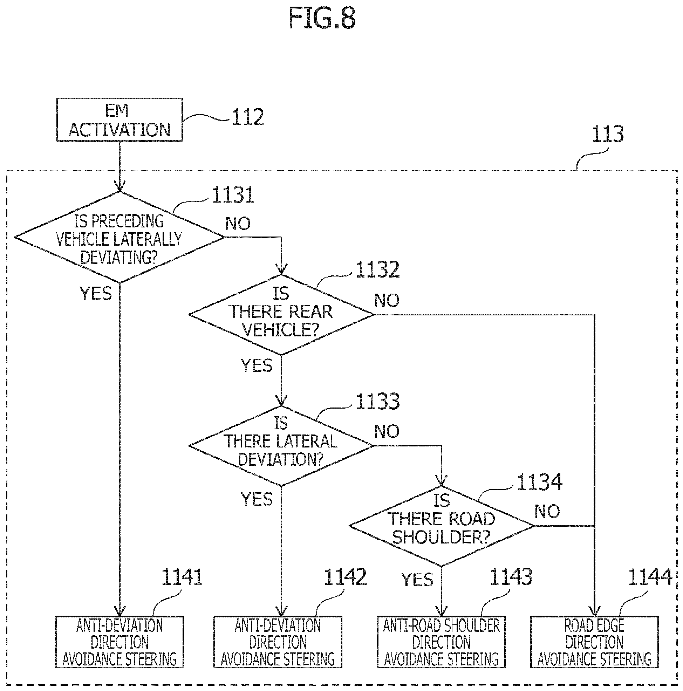

Figure 8 is a flowchart showing an avoidance direction determination when the emergency avoidance control (EM) is activated, and corresponds to step 113 in Figure 5. When the emergency avoidance control (EM) is activated (step 112), a determination of whether or not the lateral position (2c) of the vehicle ahead 2 is deviating (y2) to either left or right with respect to a driving position (212c) of the vehicle 1 is first made (step 1131).

When the lateral position (2c) of the vehicle ahead 2 is deviating (y2) to either left or right with respect to the driving position (212c) of the vehicle 1 (step 1131; YES), a direction of the avoidance steering is set to a direction (anti-deviation direction) opposite to the deviation (step 1141).

For example, as shown in Figure 6, when the vehicle ahead 2 is deviating to the left side with respect to the vehicle 1, the corrective steering to the right side, which secures a relatively wide avoidance width in the lane, is performed. A steering amount of the corrective steering can be a steering amount that gives lateral deviation corresponding to difference between width of the vehicle 1 and the deviation y2 of the vehicle ahead 2 at a braking distance by the automatic emergency braking; a corrective steering angle command is given to the EPS controller 31 via the LKA controller 15.

On the other hand, when the emergency avoidance control (EM) is activated, in a case in which the lateral deviation (y2) of the vehicle ahead 2 is equal to or less than a predetermined value, and it is determined that a sufficient avoidance width cannot be secured on a lateral side within the lane of the vehicle ahead 2 (Figure 8, step 1131; No), when the vehicle 4 in the rear is present (step 1132; YES), the lateral position (y4) of the vehicle 4 in the rear is referred to (step 1133), and when the vehicle 4 in the rear is deviating (y4) to either left or right (step 1133; YES), the direction of the avoidance steering is set to a direction (anti-deviation direction) opposite to the deviation (step 1142).

For example, as shown in Figure 7, when the vehicle 4 in the rear is deviating to the left side with respect to the vehicle 1, the corrective steering to the right side, which is a direction opposite to the deviation, is performed so that the vehicle 4 in the rear can avoid the vehicle 1 with a little steering and the avoidance width for the vehicle 4 in the rear is wider.

When the lateral deviation (y4) of the vehicle 4 in the rear is equal to or less than the predetermined value and avoidance behavior of the vehicle 4 in the rear cannot be identified (step 1133; NO), whether or not there is a neighboring lane or a road shoulder on the road edge side is referred to on the basis of the detection information of the external sensor 21 (step 1134); when there is a neighboring lane or an effective road shoulder on either the left or right side of the vehicle's driving lane (step 1134; YES), the direction of the avoidance steering is set to a side (median strip side) opposite to the neighboring lane or road shoulder in order to increase the avoidance width for the vehicle 4 in the rear to that side (step 1143).

When the vehicle 4 in the rear is not present (Figure 8, 1132; NO) or although the vehicle 4 in the rear is present, there is no neighboring lane or effective road shoulder, (step 1134; NO), the direction of the avoidance steering is set to a road edge side within the lane so that the avoidance width for the vehicle 4 in the rear is secured on a side opposite to the road edge (step 1144).

Through the above-described process, the direction and steering amount of the avoidance steering when the emergency avoidance control (EM) is activated are determined; when the emergency avoidance control (EM) is activated, the avoidance steering is performed at the same time as the activation of the automatic emergency braking (AEB). This avoidance steering is basically performed within the lane, so the steering amount is minimum, and an impact on an attitude of the vehicle 1 is small even if the avoidance steering is performed at the same time as braking at maximum deceleration; behavior stabilization control by the ESP/ABS controller 33 can cope with it.

### Control Flow during Operation of Automatic Lane Keeping System

Next, a control flow (Figure 5) during the operation of the automatic lane keeping system will be described.

### (1) Activation of Automatic Lane Keeping System (ALKS)

When the vehicle speed falls to 60 km/h or less in a state of following cruise to a vehicle ahead by the partially automated in-lane driving (PADS driving) and an activation condition is satisfied, the operation shifts to the automatic lane keeping system (ALKS) (step 100).

### (2) Collision Risk Determination

During the operation of the automatic lane keeping system (ALKS), a collision risk determination is constantly made (step 101). That is, when a predicted collision time (TTC) becomes equal to or less than a predetermined value due to appearance or the like of a stopped vehicle or an obstacle due to sudden braking of a vehicle ahead, sudden interruption of another vehicle, or lane change of a vehicle ahead (steering avoidance), and it is determined that there is a collision risk, the operation shifts to the emergency avoidance control (EM) (step 110).

### (3) Emergency Avoidance Control

When the operation shifts to the emergency avoidance control (EM), at the same time as a collision determination flag (step 111), the automatic emergency braking (AEB) is activated as the emergency avoidance control (step 112); at the same time, the avoidance steering direction is determined (step 113; Figure 8, steps 1131-1144) on the basis of the lateral position of a vehicle ahead (or obstacle in front) that has caused the activation of the emergency avoidance control and the lateral position of a vehicle in the rear when the vehicle in the rear is present within the rear predetermined distance.

### (4) Activation of Direction Indicator

A direction indicator corresponding to the determined avoidance steering direction is activated to inform the vehicle in the rear of steering intention (step 114).

### (5) Avoidance Steering and Maximum Deceleration Braking

At the same time as the corrective steering to the determined avoidance steering direction is performed within the driving lane, the automatic emergency braking at the maximum deceleration (5 m/s² or more) is performed (step 114).

### (6) Determination of Whether Override has Occurred During EM Operation

The determination of whether override has occurred continues during the operation of the emergency avoidance control (automatic emergency braking) also (step 116); when a steering intervention equal to or greater than a predetermined steering override threshold value, an accelerator operation intervention equal to or greater than a predetermined accelerator override threshold value, or a brake operation intervention equal to or greater than a predetermined brake override threshold value is detected, the automatic lane keeping system (ALKS) stops, and the operation shifts to manual driving (step 140).

### (5) Emergency Avoidance Control Completion Determination

A determination of whether the emergency avoidance control (EM) is completed is made on the basis of the vehicle state and the surrounding environment (step 117). That is, when there is no longer a risk of an imminent collision (due to emergency stop or a change in the surrounding environment), or the system is made inactive by the driver, the emergency avoidance control is determined to be completed, then hazard lamps blink (step 118), and the automatic lane keeping system (ALKS) stops (step 140).

### (6) Serious Failure Determination

During the operation of the automatic lane keeping system (ALKS), a determination of whether a serious failure has occurred is constantly made (step 102) by a self-diagnosis function of the vehicle. Examples of the serious failure include engine hydraulic pressure reduction, engine water temperature increase, and brake system abnormality that may cause an accident, fire, or the like. When it is determined that a serious failure has occurred, a serious failure flag is set (step 131), and the operation shifts to the risk minimization control (MRM) (130).

### (7) System Startup Condition being Unmet or Failure Determination

During the operation of the automatic lane keeping system (ALKS), the environmental condition estimating part 11 constantly determines whether the driving state and surrounding environmental condition of the vehicle are maintained within the operational design domain (ODD) of the system, the driver status monitor 25 constantly determines whether the driver is in a state of being able to take over driving, and the self-diagnosis function of the vehicle constantly determines whether there are failures or defects in components of the automatic lane keeping system (step 103). The ODD of the automatic lane keeping system includes environmental conditions such as strong wind in addition to road conditions, and the vehicle speed, and a system failure and an external sensor failure fall under the conditions.

When the system startup condition is unmet or a failure is determined to have occurred, stop advance notice of the automatic lane keeping system (ALKS) and the operation takeover request (TD) are made (step 120), and counting of the predetermined time (for example, ten seconds) starts (step 121).

### (8) Driving Takeover Determination

In step 122, when the driving operation takeover is confirmed by detection of the steering torque or the like within the predetermined time (for example, 10 seconds), the automatic lane keeping system (ALKS) stops and the operation shifts to manual driving (step 140). On the other hand, when the driving operation takeover is not confirmed within the predetermined time, the operation shifts to the risk minimization control (MRM) (130).

### (9) Risk Minimization Control

When the operation shifts to the risk minimization control (MRM), at the same time as the hazard lamps are activated (step 132), the minimal risk maneuver (MRM) activates (step 133), and the automated driving controller 10 performs control to decelerate and stop at the predetermined deceleration (for example, 4.0 m/s² or less) while keeping the driving lane.

### (10) Determination of Whether Override has Occurred During MRM Operation

The determination of whether override has occurred continues during the operation of the risk minimization control (MRM) also (step 134); when a steering intervention equal to or greater than a predetermined steering override threshold value, an accelerator operation intervention equal to or greater than a predetermined accelerator override threshold value, or a brake operation intervention equal to or greater than a predetermined brake override threshold value is detected, the automatic lane keeping system (ALKS) stops, and the operation shifts to manual driving (step 140).

### (11) Risk Minimization Control Completion Determination

A determination of whether the risk minimization control (MRM) is completed is made on the basis of the vehicle state (step 135). That is, when the system is made inactive or the system stops the vehicle, the risk minimization control is determined to be completed; the automatic lane keeping system (ALKS) stops (step 140), the hazard lamps keep blinking, and all vehicle systems other than that stop.

### Operation and Effects

As detailed above, in the driving control apparatus for a vehicle according to the present invention, when the emergency avoidance control (EM) is activated, the direction of avoidance steering is determined on the basis of the lateral position (y2) of the vehicle ahead 2 (or obstacle) in the vehicle's driving lane and the avoidance steering is performed together with the emergency braking, so there is an advantage of being able to improve the probability of collision avoidance by the avoidance steering even when the braking distance for emergency stop due to an unexpected event is insufficient.

For example, as shown in Figure 6, when the lateral position 2c of the vehicle ahead 2 is deviating y2 to the left side with respect to the driving position (212c) of the vehicle 1, the minimum avoidance steering given by the difference between the vehicle width and the deviation y2 is performed to the right side (anti-deviation direction), which can secure a relatively wide avoidance width; in a situation in which the vehicle is closest to the vehicle ahead 2, even if the braking distance is insufficient, as indicated by a reference sign 1', a collision with the vehicle ahead 2 can be avoided.

At this time, since the avoidance steering is performed in the vehicle 1's driving lane, it is not necessary to consider movements of vehicles in neighboring lanes; there is also an advantage that control can be immediately performed regardless of the movements of the vehicles in the neighboring lanes.

At this time, in a case in which another vehicle is traveling behind the vehicle 1, the emergency braking is automatic or manually performed caused by the operation of the emergency brake of the vehicle 1, and the vehicle 1 moves to the right side of the vehicle ahead 2 by the avoidance steering; so, on the left side of the vehicle 1, that is, on the vehicle ahead 2 side, the avoidance width is secured.

When the emergency avoidance control (EM) is activated, an inter-vehicle time, which is about twice an inter-vehicle time between the vehicle 1 and the vehicle ahead 2, is secured between the vehicle ahead 2 and the vehicle in the rear; so, as long as the succeeding vehicle can avoid a collision with the vehicle 1 immediately before it, there is a high probability of being able to brake and stop before reaching a stop position of the vehicle ahead 2. Therefore, the avoidance steering described above is also advantageous in that the avoidance width can be prepared for the vehicle in the rear in order to reduce the risk that the vehicle 1 is subject to rear-end collision by the vehicle in the rear.

When the emergency avoidance control (EM) is activated, when the lateral deviation y2 of the vehicle ahead 2 is equal to or less than the predetermined value, the direction of avoidance steering is determined on the basis of the lateral position of the vehicle in the rear, and so the risk that the vehicle 1 is subject to rear-end collision by the vehicle in the rear can be reduced.

For example, as shown in Figure 7, when the vehicle ahead 2 is in front of the vehicle 1, if the lateral position 4c of the vehicle 4 in the rear is deviating y4 to the left side with respect to the driving position 215c of the vehicle 1, then the avoidance steering is performed to the right side (anti-deviation direction), which can secure a relatively wide avoidance width for the vehicle 4 in the rear; so, the risk that the vehicle 1 is subject to rear-end collision by the vehicle 4 in the rear (4') can be reduced, and the avoidance steering can increase the possibility of avoiding a collision with the vehicle ahead 2'.

When the emergency avoidance control (EM) is activated, when the lateral deviation y4 of the vehicle 4 in the rear is equal to or less than the predetermined value, whether or not there is a neighboring lane or an effective road shoulder that can serve as an avoidance space for the vehicle 4 in the rear, on a road edge side in the vehicle's driving lane is referred to; when there is a neighboring lane or an effective road shoulder that can serve as the avoidance space for the vehicle 4 in the rear, the avoidance steering is performed to a direction (median strip side) opposite to those; thereby the avoidance width for the vehicle 4 in the rear is increased and the risk that the vehicle 1 is subject to rear-end collision by the vehicle 4 in the rear can be reduced.

On the other hand, when there is no neighboring lane or effective road shoulder that can serve as the avoidance space for the vehicle 4 in the rear, the avoidance steering to a road edge side is performed; thereby the avoidance width for the vehicle 4 in the rear is increased to a neighboring lane side (median strip side) opposite to the road edge, and the risk that the vehicle 1 is subject to rear-end collision by the vehicle 4 in the rear can be reduced.

### Other Embodiments

Although in the above embodiment, the case in which the avoidance steering is performed within the vehicle 1's driving lane when the emergency avoidance control (EM) is activated is mainly described, the avoidance steering may be performed across the lane marking 5L or 5R between the driving lane and a neighboring lane or road shoulder. Therefore, the avoidance steering may be performed including at least a partial movement from the vehicle 1's driving lane to the neighboring lane or road shoulder. In particular, when the relative lateral deviation of the vehicle ahead or vehicle in the rear is equal to or less than the predetermined value, the avoidance steering can be also performed including a lane change to the neighboring lane or road shoulder as long as it is confirmed that there is no other vehicle or obstacle within forward and rearward predetermined ranges in the neighboring lane or road shoulder.

Although in the above embodiment, the state transition of control during the operation of the automatic lane keeping system (ALKS) is mainly described, the avoidance steering control according to the present invention may be performed when the emergency avoidance control (EM) is activated during operation of another automated driving function, such as the partially automated in-lane driving system (PADS) or partially automated lane change system (PALS).

Although some embodiments of the present invention have been described above, the present invention is defined in the appended claims.

### [Reference Signs List]

10 Automated driving controller
11 Environmental condition estimating part
12 Path generating part
13 Vehicle control part
14 ACC controller
15 LKA controller
21 External sensor
22 Internal sensor
25 Driver status monitor
31 EPS controller
32 Engine controller
33 ESP/ABS controller
34 Manual steering (steering wheel)

## Claims

1. A driving control apparatus (10) for a vehicle, comprising:
an environmental condition estimating part (11) including a surrounding recognition function for recognizing a vehicle's driving lane, neighboring lanes, other vehicles driving in the driving lanes, and surrounding environments and a function for obtaining the vehicle's moving state;
a path generating part (12) for generating a target path on the basis of information obtained by the environmental condition estimating part (11); and
a vehicle control part (13) configured to perform speed control and steering control for making the vehicle follow the target path, and having:
a function for performing automated in-lane driving by maintaining a set vehicle speed when there is no vehicle ahead in the vehicle's driving lane, and maintaining a set inter-vehicle distance when there is a vehicle ahead; and
an EM function for performing emergency avoidance control including operation of an emergency brake when a collision with a vehicle ahead or an obstacle in front in the vehicle's driving lane is predicted,
**characterized in that** when the EM function is activated, when a lateral position of the vehicle ahead or obstacle in the vehicle's driving lane is deviating to either left or right with respect to the vehicle's driving position, a direction of avoidance steering is set to a direction opposite to the deviation and the avoidance steering is performed together with the emergency braking.

2. The driving control apparatus (10) for the vehicle according to claim 1, wherein when the EM function is activated, when the deviation of the lateral position of the vehicle ahead or an obstacle is equal to or less than a predetermined value and there is no vehicle in the rear in the vehicle's driving lane, the direction of the avoidance steering is set to a road edge side, and when there is a vehicle in the rear in the vehicle's driving lane and a lateral position of the vehicle in the rear is deviating to either left or right with respect to the vehicle's driving position, the direction of the avoidance steering is set to a direction opposite to the deviation of the vehicle in the rear.

3. The driving control apparatus (10) for the vehicle according to claim 2, wherein when there is a vehicle in the rear in the vehicle's driving lane, the deviation of the lateral position of the vehicle in the rear is equal to or less than the predetermined value, and there is no neighboring lane nor road shoulder on the road edge side, the direction of the avoidance steering is set to the road edge side, and when there is neighboring lane or road shoulder on the road edge side, the direction of the avoidance steering is set to a median strip side.

4. The driving control apparatus (10) for the vehicle according to any one of claims 1 to 3, wherein the avoidance steering when the EM function is activated is performed within the driving lane.

5. The driving control apparatus (10) for the vehicle according to any one of claims 1 to 3, wherein the avoidance steering when the EM function is activated is performed including at least a partial movement from the driving lane to a neighboring lane or road shoulder.

## Patentansprüche

1. Fahrsteuervorrichtung (10) für ein Fahrzeug, umfassend:
einen Umweltzustand-Schätzteil (11), welcher eine Umgebung-Erkennungsfunktion zum Erkennen einer Fahrspur eines Fahrzeugs, benachbarter Spuren, anderer Fahrzeuge, welche in der Fahrspur fahren, und umgebender Umweltbedingungen sowie eine Funktion zum Erhalten des Bewegungszustands des Fahrzeugs umfasst;
einen Weg-Erzeugungsteil (12) zum Erzeugen eines Zielweges auf Grundlage von Informationen, welche durch den Umweltzustand-Schätzteil (11) erhalten worden sind; und
einen Fahrzeug-Steuerteil (13), welcher dazu eingerichtet ist, eine Geschwindigkeitssteuerung und eine Lenksteuerung durchzuführen, um das Fahrzeug dazu zu bringen, dem Zielweg zu folgen, und welcher aufweist:
eine Funktion zum Durchführen eines automatisierten spurgetreuen Fahrens durch Beibehalten einer festgelegten Fahrzeuggeschwindigkeit, wenn sich in der Fahrspur des Fahrzeugs kein Fahrzeug voraus befindet, und durch Beibehalten eines festgelegten Zwischenfahrzeugabstands, wenn sich ein Fahrzeug voraus befindet; und
eine EM-Funktion zum Durchführen einer Not-Ausweichsteuerung, welche eine Betätigung einer Notbremse umfasst, wenn eine Kollision mit einem sich voraus befindlichen Fahrzeug oder einem Hindernis vor der Fahrspur des Fahrzeugs vorhergesagt ist,
**dadurch gekennzeichnet, dass**, wenn die EM-Funktion aktiviert wird, wenn eine laterale Position des sich voraus befindlichen Fahrzeugs oder des Hindernisses in der Fahrspur des Fahrzeugs in Bezug auf die Fahrposition des Fahrzeugs entweder nach links oder nach rechts abweicht, eine Richtung einer Ausweichlenkung auf eine Richtung festgelegt wird, welche entgegengesetzt zu der Abweichung ist, und die Ausweichlenkung zusammen mit der Notbremsung durchgeführt wird.

2. Fahrsteuervorrichtung (10) für das Fahrzeug nach Anspruch 1, wobei, wenn die EM-Funktion aktiviert wird, wenn die Abweichung der lateralen Position des sich voraus befindlichen Fahrzeugs oder eines Hindernisses gleich wie oder kleiner als ein vorbestimmter Wert ist und sich in der Fahrspur des Fahrzeugs kein hinteres Fahrzeug befindet, die Richtung der Ausweichlenkung auf eine Straßenrandseite festgelegt wird, und wenn sich in der Fahrspur des Fahrzeugs ein hinteres Fahrzeug befindet und eine laterale Position des hinteren Fahrzeugs in Bezug auf die Fahrposition des Fahrzeugs entweder nach links oder nach rechts abweicht, die Richtung der Ausweichlenkung auf eine Richtung festgelegt wird, welche entgegengesetzt zu der Abweichung des hinteren Fahrzeugs ist.

3. Fahrsteuervorrichtung (10) für das Fahrzeug nach Anspruch 2, wobei, wenn sich in der Fahrspur des Fahrzeugs ein hinteres Fahrzeug befindet, die Abweichung der lateralen Position des hinteren Fahrzeugs gleich wie oder kleiner als der vorbestimmte Wert ist und weder eine benachbarte Spur noch ein Straßenbankett an der Straßenrandseite vorhanden ist, die Richtung der Ausweichlenkung auf die Straßenrandseite festgelegt wird, und wobei, wenn eine benachbarte Spur oder ein Straßenbankett an der Straßenrandseite vorhanden ist, die Richtung der Ausweichlenkung auf eine Mittelstreifenseite festgelegt wird.

4. Fahrsteuervorrichtung (10) für das Fahrzeug nach einem der Ansprüche 1 bis 3, wobei die Ausweichlenkung innerhalb der Fahrspur durchgeführt wird, wenn die EM-Funktion aktiviert wird.

5. Fahrsteuervorrichtung (10) für das Fahrzeug nach einem der Ansprüche 1 bis 3, wobei die Ausweichlenkung mit wenigstens einer Teilbewegung von der Fahrspur zu einer benachbarten Spur oder einem Straßenbankett durchgeführt wird, wenn die EM-Funktion aktiviert wird.

## Revendications

1. Appareil de commande de conduite (10) pour un véhicule, comprenant :
une partie d'estimation de conditions d'environnement (11) comportant une fonction de reconnaissance d'alentours pour reconnaître une voie de circulation du véhicule, des voies voisines, d'autres véhicules roulant sur les voies de circulation et les environnements aux alentours, et une fonction pour obtenir un état de déplacement du véhicule ;
une partie de génération de trajectoire (12) pour générer une trajectoire cible sur la base d'informations obtenues par la partie d'estimation de conditions d'environnement (11) ; et
une partie de commande de véhicule (13) pour effectuer une commande de vitesse et une commande de pilotage pour faire en sorte que le véhicule suive la trajectoire cible, et présentant :
une fonction pour effectuer une conduite automatisée dans la voie par maintien d'une vitesse de véhicule définie lorsqu'il n'y a pas de véhicule qui précède dans la voie de circulation du véhicule, et maintien d'une distance entre véhicules définie lorsqu'il y a un véhicule qui précède ; et
une fonction EM pour effectuer une commande d'évitement d'urgence, y compris l'actionnement d'un frein d'urgence lorsqu'une collision avec un véhicule qui précède ou un obstacle à l'avant dans la voie de circulation du véhicule est prévue,
**caractérisé en ce que** lorsque la fonction EM est activée, lorsqu'une position latérale du véhicule qui précède ou d'un obstacle dans la voie de circulation du véhicule s'écarte à gauche ou à droite par rapport à la position de conduite du véhicule, une direction de pilotage d'évitement est réglée sur une direction opposée à l'écart et le pilotage d'évitement est effectué en même temps que le freinage d'urgence.

2. Appareil de commande de conduite (10) pour le véhicule selon la revendication 1, dans lequel lorsque la fonction EM est activée, lorsque l'écart de la position latérale du véhicule qui précède ou d'un obstacle est égal ou inférieur à une valeur prédéterminée et qu'il n'y a pas de véhicule à l'arrière dans la voie de circulation du véhicule, la direction du pilotage d'évitement est réglée sur un côté bord de route, et lorsqu'il y a un véhicule à l'arrière dans la voie de circulation du véhicule et qu'une position latérale du véhicule à l'arrière s'écarte vers la gauche ou vers la droite par rapport à la position de conduite du véhicule, la direction du pilotage d'évitement est réglée sur une direction opposée à l'écart du véhicule à l'arrière.

3. Appareil de commande de conduite (10) pour le véhicule selon la revendication 2, dans lequel lorsqu'il y a un véhicule à l'arrière dans la voie de circulation du véhicule, l'écart de la position latérale du véhicule à l'arrière est égal ou inférieur à la valeur prédéterminée, et qu'il n'y a pas de voie voisine ni d'accotement sur le côté bord de route, la direction du pilotage d'évitement est réglée sur le côté bord de route, et lorsqu'il y a une voie voisine ou un accotement sur le côté bord de route, la direction du pilotage d'évitement est réglée sur un côté terre-plein central.

4. Appareil de commande de conduite (10) pour le véhicule selon l'une quelconque des revendications 1 à 3, dans lequel la pilotage d'évitement lorsque la fonction EM est activée est effectué à l'intérieur de la voie de circulation.

5. Appareil de commande de conduite (10) pour le véhicule selon l'une quelconque des revendications 1 à 3, dans lequel le pilotage d'évitement lorsque la fonction EM est activée est effectué de manière à comporter au moins un mouvement partiel à partir de la voie de circulation vers une voie ou un accotement voisin(e).
